# EUROPEAN PATENT APPLICATION

(11) **EP 4 108 326 A1**
(43) Date of publication of application: **28.12.2022**
(21) Application number: 21181806.7
(22) Date of filing: 25.06.2021
(51) Int. Cl.: B01J 21/06, B01J 23/52, C01B 32/40, C10K 3/02

(54) **PLASMONIC CATALYTIC REVERSE WATER GAS SHIFT REACTION**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: The designation of the inventor has not yet been filed
(74) Representative: V.O.

(57) **Abstract**

The disclosure pertains to a plasmonic catalytic process for the reverse water gas shift reaction and corresponding catalysts. In an embodiment, TiO₂-supported Au nanoparticles are used as catalyst.

## Description

### Field

The invention pertains to a plasmonic catalytic process and catalyst for the reverse water-gas shift (rWGS) reaction.

### Introduction

Sunlight-powered reduction of CO₂ to fuels and chemicals is a promising strategy to close the carbon loop and facilitate the energy transition. For instance desirably CO₂ is hydrogenated to CO via the reverse water-gas shift (rWGS) reaction (Formula 1) for instance using sunlight. CO offers great promise as building block for multiple chemicals such as methanol and long chain hydrocarbons (LC-HCs). LC-HCs can be produced through the well-established Fischer-Tropsch synthesis (FTS).

CO₂ + H₂ ⇄ CO + H₂O Δ*H*_{298K} = 41.2 kJ mol⁻¹ (1)

The reaction is endothermic and at low temperatures the conversion of CO₂ to methane is favored (Sabatier reaction). For existing processes and catalysts, CH₄ is the main formed product at temperatures below 600°C and temperatures of above 800°C are used to promote the rWGS reaction to increase CO selectivity to about 80%. Such high temperature can lead to catalyst particle sintering, coke formation and consequently a fast catalyst deactivation.

There remains a desire for catalysts and processes for this reaction. Particularly desired is to provide a selective catalyst that is capable of suppressing most of the CH₄ production, preferably even at room temperature, and capable to obtain high activity.

Zhu, M., Ge, Q. & Zhu, X. Catalytic Reduction of CO2 to CO via Reverse Water Gas Shift Reaction: Recent Advances in the Design of Active and Selective Supported Metal Catalysts. Trans. Tianjin Univ. 26, 172-187 (2020) provides a review of supported metal catalyst for the rWGS reaction.

### Summary

The invention pertains in a first aspect to a plasmonic catalytic process for the reverse water-gas shift (rWGS) reaction using a plasmonic catalyst comprising supported plasmonic metal nanoparticles, and to such a catalyst.

An aspect of the invention pertains to a plasmonic catalytic process for the reverse water gas shift reaction (1)

CO₂ + H₂ ⇄ CO + H₂O (1)

using a catalyst comprising supported metal nanoparticles, preferably TiO₂-supported Au plasmonic nanoparticles, wherein the temperature of the reactor is preferably less than 95°C, the process involving exposing the catalyst to light. Preferably, the catalyst is irradiated with at least solar light or concentrated solar light. Preferably the Au nanoparticles have an average particle size of 5.0 nm or less.

The invention also pertains to a catalyst comprising TiO₂-supported Au nanoparticles, wherein the Au nanoparticles have an average particle size of 16.0 nm or less, preferably 5.0 nm or less, preferably of 2 nm or less, e.g. between 1.0 and 2.0 nm, and preferably wherein the catalyst comprises 1 - 10 wt.% Au based on weight of TiO₂ support, more preferably 2 - 5 wt.%.

In a preferred embodiment, the catalyst comprises TiO₂-supported Au nanoparticles, wherein the nanoparticles preferably have an average particle size 2 nm or less, preferably wherein the catalyst comprises 1 - 10 wt.% Au based on weight of TiO₂ support, more preferably 2 - 5 wt.%, and wherein preferably the support is TiO₂ anatase.

### Brief description of the drawings

Figure 1 schematically illustrates an example catalyst according to the invention.
Figure 2 shows CO production and temperature vs. time for an example process.
Figure 3 illustrates a comparison of the plasmonic catalytic process of the invention under illuminated conditions and under dark conditions.
Figure 4 illustrates a comparison of catalyst samples with different particle sizes.
Figure 5 schematically illustrates an example reactor that was used in the examples.

Any embodiments illustrated in the figures are examples only and do not limit the invention.

### Detailed description

The present invention is based in a first aspect on the judicious insight that supported plasmonic particles form an efficient plasmonic catalyst for the sunlight-powered reverse water-gas shift (rWGS) reaction, optionally without additional external heating. In a particular embodiment, TiO₂-supported Au nanoparticles (NPs) are used.

Without wishing to be bound by way of theory, based on experimental and theoretical analyses, it is considered that the mechanism promoting the reaction appears to involve a synergistic operation of photothermal and photochemical contributors. The main contribution to the activity may result from the Au NPs acting as nano-heaters to promote the reaction photothermally, while charge transfer processes contribute to desorption the formed H₂O and CO from the Au/TiO₂ catalyst surface. The processes described herein may preferably operate at low catalyst bed temperature and/or almost ambient reactor temperature (<30°C) as a unique feature for the scalability of the process into an industrial application, wherein the process may efficiently reduce CO₂ to CO with a selectivity of at least 95% or even at least 98%.

Aspects of the invention pertain to a catalytic process (or method) for the reverse water gas shift reaction (rWGS). The catalyst comprises for instance metal nanoparticles. The catalyst comprises for instance supported plasmonic nanoparticles. Preferably the catalyst comprises supported metal plasmonic nanoparticles and a metal oxide support. The support is for instance a semiconductor.

The term "nanoparticles" as used in this application is meant to refer to particles with at least one dimension (particle size) of from about 1 to about 1000 nm, such as from about 1 to about 500 nm, from about 2 to about 300 nm or from about 5 to about 200 nm. These dimensions can be measured with dynamic light scattering as the volume median (Dv50), at least above 10 nm. For smaller particle sizes transmission electron microscopy (TEM), in particular High-Angle Annular Dark Field Scanning TEM, can be used to determine the particle size based on number average, equivalent sphere diameter. This includes spherical or approximately spherical (cuboidal, pyramidal) particles with a diameter (or at least two or three dimensions) in these ranges. In case of spherical particles the one dimension is preferably the diameter of the particles. For non-spherical particles, the one dimension can, for instance, be the equivalent spherical diameter which is defined as the diameter of a sphere of equivalent volume. The term "nanoparticle" is also meant to include rod-like nanoparticles, also known as nanorods. Such nanorods typically have an aspect ratio (longest dimension divided by the shortest dimension) in the range of 2-40, more often in the range of 2-20, such as in the range of 3-10. Typically, each of the dimensions of a rod-like nanoparticle is in the range of from about 1 nm to about 1000 nm.

In a preferred embodiment, the nanoparticles have a particle size of e.g. 16 nm or less, or 5 nm or less, e.g. have a diameter in the range of 1.0 - 5.0 nm, or a particle size of less than 3.0 nm or up to 2.0 nm, more preferably 1.0 - 2.0, e.g. as number average particle size, preferably as number average equivalent sphere diameter and preferably as measured with TEM, preferably with High-Angle Annular Dark Field Scanning Transmission Electron Microscopy. It was surprisingly found that even metallic nanoparticles with a particle size of less than 3.0 nm contribute to plasmonic catalytic effect in particular for TiO₂ supported catalysts. Preferably the nanoparticles are substantially spherical and have an aspect ratio of less than 2 based on number average.

Very surprisingly better performance in the rWGS reaction was found with metallic nanoparticles with a particle size of 2 nm or less.

This is even more surprising in view of prior art teachings indicating that particles with a particle size of at least 3 nm should be used for obtaining plasmonic effects.

Suitable metals for the metallic nanoparticles include one or more selected from the group consisting of Ag, Al, Au, Cu, Ni, Co, Pd, Pt, In, Sn, Zi, Ti, Cr, Ta, W, Fe, Rh, Ir, Ru, Os, and Pb. Preferably, the metallic nanoparticles comprise one or more metals are selected from the group consisting of Ag, Al, Au, Cu, Ni, Co, Pd, Pt, and Rh.

More preferably, Au nanoparticles are used.

A mixture of nanoparticles of different metals, sizes and shapes may also be used. Furthermore, nanoparticles comprising more than one metal may be used, e.g. alloys.

The metallic nanoparticles used have, for instance at least in combination with the support, a maximum absorbance in the range of 400 - 700 nm, e.g. in the range of 500 - 600 nm.

The metallic nanoparticles are for instance supported by a support. The support material is solid and can be is for instance porous. The support for instance is made of a metal oxide, for example a porous metal oxide, for example, TiO₂, SiO₂, CeO₂₋ₓ (0 ≤ x < 0.5) or Al₂O₃ or for instance zeolites. Particularly preferred is TiO₂, for instance anatase.

The support is for instance particulate. In a possible embodiment, which does not limit the invention, nanoparticle are used as the support, e.g. TiO₂ nanoparticles, e.g. nanoparticles with particle size 10-25 nm.

The process involves for instance contacting a gaseous reaction mixture comprising CO₂ and H₂ to the catalyst. For instance the gaseous reaction mixture comprises at least 50 vol.% of CO₂ and H₂ in total. The gaseous reaction mixture comprises for instance a mixture of CO₂ and H₂ and for at least 90 vol.% in total or at least 99 vol.% in total.

The process is for instance operated with a total pressure of at least 1.0 bar absolute. The process is for instance operated with a total pressure in the range of 1.0 - 10 bar absolute or e.g. 2 - 5 bar absolute.

The H₂ originates for instance from a green source, e.g. water electrolysis, for instance using solar power to provide green electricity for the water electrolysis.

The CO₂ originates for instance from carbon capture from a waste or exhaust gas stream. The CO₂ for instance originates from a desorption stage of a solvent-based carbon capture system. Alternatively, the CO₂ may originate from direct air capture.

The process involves exposing the catalyst to light, preferably to light comprising one or more wavelengths which are absorbed by at least part of the plasmonic nanoparticles in the presence of a reaction mixture comprising CO₂ and H₂. In some embodiments, the process comprises plasmonic heating of a reaction mixture, which reaction mixture comprises CO₂ and H₂ in the presence of plasmonic particles, preferably supported plasmonic particles, by exposing said plasmonic particles to light comprising one or more wavelengths which are absorbed by at least part of the plasmonic particles.

The phrase "exposing a reaction mixture to light" and exposing the catalyst to light as used in this application is meant to include both irradiating the reaction mixture and/or catalyst with light and illuminating the reaction mixture and/or catalyst. The light can typically have a photon energy in the range of about 0.3 to about 3.5 eV and can accordingly comprise ultraviolet (UV), visible, near-infrared (NIR), and infrared (IR) light. The light is preferably continuous (CW), but alternatively a pulsed light source can be used. The light can be focused (*e.g.* a laser beam), the reaction mixture and/or catalyst can also be homogenously exposed e.g. to ambient light, artificial solar light, natural sunlight, light emitting diode (LED) light. The light to which the reaction mixture and/or catalyst is exposed may be monochromatic, but may also span a specific range of the spectrum. In a specific embodiment, natural sunlight may be used in combination with an energy efficient man-made light source to continuously operate the chemical process and constant light intensity. In some embodiments, concentrated natural sunlight is used.

Preferably the light is non-coherent and preferably the light is not laser light. Preferably the light is solar light or concentrated solar light. For instance, the irradiation is at least 2.0 kW·m⁻², or e.g. at least 3.0 kW·m⁻², or at least 10 kW·m⁻² and e.g. less than 100 kW m⁻²; for instance with air mass coefficient AM 1.5. Preferably, the irradiation level is in the range of 2 - 50 sun, or e.g. at least 5 sun, or at least 10 sun, with 1 sun = 1 kW·m⁻², AM1.5.

As used herein, AMI.5 for instance according to IEC 60904, e.g. according to IEC 60904:2020. In particular AM 1.5 may refer to the global reference spectral irradiance AMI.5 (AM 1.5G) defined in IEC 60904-3.

In practice, the process may involve exposure to actual ambient solar light or concentrated solar light obtained by concentrating actual ambient solar light.

In an optional embodiment, the light has an irradiance in the range of 500 - 600 nm of 15 - 25%, e.g. 17 - 23% relative to total irradiance in the range 400 - 1100 nm. In optional embodiments, the process involves exposing the catalyst to such light in the presence of the reactants.

For instance, the process involves concentrating sunlight onto a receiver, the receiver comprising a reactor for carrying out the rWGS reaction and comprising the reaction mixture and catalyst.

The process is carried out in a reactor. The reactor is configured e.g. for a batch process or for a continuous process (e.g. flow reactor). Preferably the reactor is a continuous flow reactor and the process is a continuous process.

The term "plasmon" as used in this application is meant to refer to surface plasmons. By analogy, the term "plasmonic" as used in this application is meant to refer to the presence of surface plasmons. The term "plasmonic particle" as used in this application is meant to refer to a surface-plasmon supporting structure. A plasmonic particle typically is a nanoparticle of a conducting material. This conducting material can be a metal or metallic material, but for instance also carbon. This term is meant to include structured surfaces and nanoparticles comprising conductive materials. Plasmonic particles are characterised by exhibiting plasmon resonance. The plasmon resonance can be at one or more specific plasmon resonance wavelengths. Rod-like nanoparticles, for example, can have two distinct plasmon resonance wavelengths, one derived from the longer dimension of the particle and the other deriving from the shorter dimension of the particle. It is also possible that plasmon resonance occurs within a certain spectral range. This may depend, for instance, on the particle size distribution of the plasmon particles.

The term "plasmonic heating" as used in this application is meant to refer to the release of heat from a plasmonic particle due to the absorption of light through plasmonic resonance.

Also encompassed by the term "plasmonic catalytic process " is the situation where a plasmonic catalytic particle is brought into the excited state by absorption of light after which the plasmon catalytic particle relaxes from this "hot state" via a charge transfer (such as an electron transfer) to one or more reactants or one or more catalysts.

Preferably, the temperature of the reactor (reactor temperature) is less than 150°C, less than 95°C, more preferably less than 40°C or even less than 30°C during the process. The reactor temperature can be measured for instance with a thermocouple located outside a catalyst bed, for instance at a distance of 10 to 100 mm from the catalyst bed and for instance inside the reactor enclosure or reactor cell. The reactor temperature indicates the temperature of the bulk of the reactor.

In some embodiments, the process does not involve the use of additional heating above any heating provided by the light irradiation.

In a particular embodiment, the catalyst comprises TiO₂-supported Au nanoparticles, wherein the Au nanoparticles have an average particle size of 5.0 nm or less, e.g. in the range of 1.0 - 5.0 nm, or e.g. of 2.0 nm or less, more preferably 1.0 - 2.0 nm, and wherein the catalyst comprises 1 - 10 wt.% Au based on weight of TiO₂ support, more preferably 2 - 5 wt.%. The support is preferably anatase.

In a preferred embodiment, the metal nanoparticles comprise at least one strongly plasmonic metal, e.g. a metal selected from the group consisting of Au, Ag, Al, and Cu; wherein the metal nanoparticles have an average particle size of 5.0 nm or less, and the support comprises a metal oxide, more wherein the metal oxide support is a semiconductor. In a particularly preferred embodiment, the plasmonic catalyst comprises TiO₂-supported Au plasmonic nanoparticles, wherein the Au nanoparticles have an average size of 2 nm or less, e.g. of less than 2 nm.

Preferably with the catalyst of these embodiments, the rWGS process is carried out using solar light or concentrated solar light and preferably with a reactor temperature of less than 40°C or less than 30°C, e.g. 15 - 25°C. Good results were obtained with these catalyst and supports, as shown in the examples.

The invention also pertains to a catalyst preparation method wherein TiO₂ supported Au nanoparticles are prepared by deposition-precipitation of AuCl₄ 3H₂O as precursor and mixing with TiO₂.

In a preferred embodiment, the catalyst preparation method comprises adding catalyst precursor, e.g. AuCl₄*3H₂O, to water under stirring and adjusting the pH to 9, e.g. by adding a base, such as NaOH, and adding support material, e.g. TiO₂, once the pH is stabilized. The method may further comprise adjusting the pH back to 9, stirring under pH control, and recuperating solid material from the resulting dispersion. The support material is provided by e.g. 10 - 25 nm nanoparticles e.g. of TiO₂.

The invention also pertains to a catalyst comprising TiO₂-supported Au nanoparticles, wherein the nanoparticles have an average particle size of 5 nm or less, preferably an average particle size of 2 nm or less, preferably wherein the catalyst comprises 1 - 10 wt.% Au based on weight of TiO₂ support, more preferably 2 - 5 wt.%. The inventive process for instance uses the inventive catalyst. The catalyst is for instance prepared using the described catalyst preparation method.

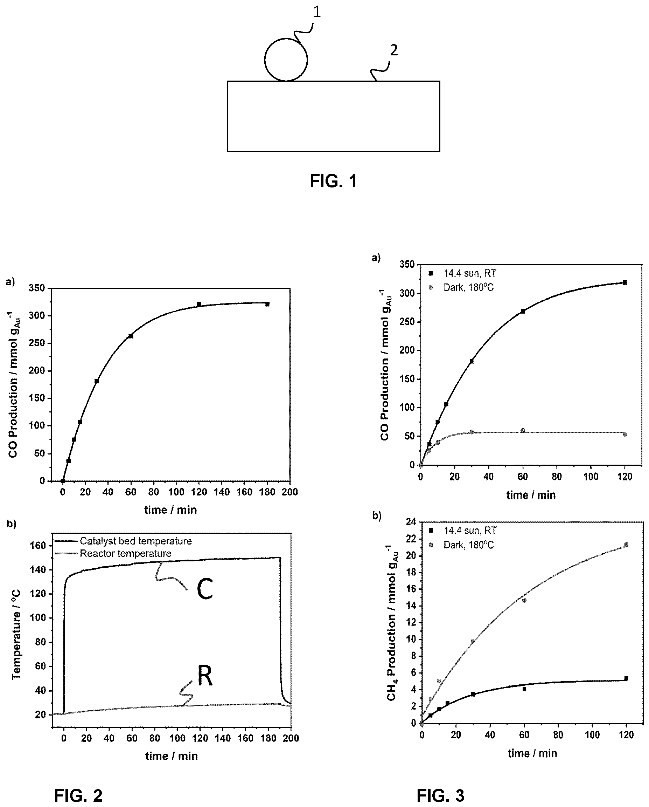

**Fig. 1** schematically illustrates a catalyst according to the invention and/or that can be used in a process according to the invention comprising a nanoparticle (1) and a support material (2).

In conclusion the invention pertains to a plasmonic catalytic process for the reverse water gas shift reaction and corresponding catalysts. In an embodiment, TiO₂-supported Au nanoparticles are used as catalyst.

### Examples

The invention will now be further illustrated by the following non-limiting example(s). These examples do not limit the invention and do not limit the claims.

### Example 1

**Synthesis of the Au/TiO₂ catalyst.** The Au/TiO₂ catalyst was synthesized by a deposition-precipitation method. AuCl₄*3H₂O (, 99.9%) was used as the Au precursor. The Au precursor (200 mg) was added to ultra-filtered water (18.2 MΩ cm, 100 ml) in vigorous stirring. Then, the pH of the solution was adjusted to 9 by adding NaOH (0.1M). Once the pH stabilized, TiO₂ (1.00 g, 99.5% anatase,) was added to the mixture, followed by an adjustment of the pH back to 9. The dispersion was left in vigorous stirring for 48 hours at room temperature, keeping a continuous control of the pH with a pH meter. The solid was recuperated by filtration and extensively washed with ultra-filtered water (18.2 MΩ cm). Subsequently, the solid was dried in a vacuum oven at 100°C for 2 hours and calcinated in a tube furnace at 200°C in a 20:80 O₂:Ar atmosphere for 4h, following a heating ramp of 2°C·min⁻¹.

**ICP Analysis:** The Au content in the catalyst was analyzed via ICP-AES in axial detection mode. Hereto, the sample was digested using a 10 mL mixture of mineral acids (HCl: HNO₃:HF in a 3:1:1 ratio) in a Milestone microwave setup, whereupon dilution in a 50 mL polypropylene flask was carried out. The digestion procedure is executed *in duplo* and average values are reported. An external calibration curve is used for quantification starting from a 1000 ppm Perkin Elmer Au standard in 10% HCl. 5 ppm QC measurements are regularly checked to assure the instruments constant performance.

**TEM Analysis:** Transmission Electron Microscopy (TEM) studies were performed using a JEOL ARM 200F Transmission Electron Microscope, probe corrected, equipped with a 100 mm² Centurio SDD EDX detector, operated at 200 kV. Imaging was performed in High Angle Annular Dark Field (HAADF) Scanning TEM mode. The HAADF detector uses the electrons scattered over large angles for imaging. The HAADF detector is therefore mass sensitive, which means that higher brightness in the image corresponds to the presence of (a larger concentration of) heavier atoms. This allows for a fast and accurate inventory of the Au particle size on the TiO₂ support. Samples were prepared by preparing a suspension of the material in ethanol and by depositing a drop of this suspension onto a carbon-coated copper TEM grid and drying at room temperature.

**Determination of the Au particle size distribution:** In order to determine the average particle size of the Au NPs and the particle size distribution, we measured the dimensions of 200 NPs from the corresponding TEM micrograph, using the image analysis software ImageJ.

**XRD Measurements:** XRD data sets were collected using a powder diffractometer (Panalytical) using a Prefix Bragg Brentano mirror and a HD Cu radiation source with a fixed slit of ¼ inch. A Pixcel Id detector was used. An anti-scatter slit of 1 inch was used. The incident beam path is 4.41°, radius 240 mm. The used wavelength is K-Alpha1 (1.5405980 Å).

**UV-Vis Measurements:** The UV-Visible diffuse reflectance spectrum was obtained using a Shimadzu UV-3600 spectrophotometer. The powder samples were pressed on a support, and their reflectance was measured in the range between 300 nm and 1200 nm through an integrating sphere. The baseline for the measurements was done with BaSO₄.

**Photocatalytic tests:** The sunlight-powered CO₂ hydrogenation tests were performed were performed in a custom-made batch photoreactor, equipped with a quartz window at the top to allow the light irradiation. The solar simulator (Newport Sol3A) was placed above it and was equipped with a high flux beam concentrator (Newport 81030), and AMI.5 filter and the possibility to introduce cut-off filters. The irradiated area was about 3.14 cm² and was covered by the sample. The reactor has thermocouples to measure the temperatures at the top and bottom of the reactor, and in contact with the bottom of the catalyst bed.

In a typical run, 200 mg of the catalyst was put in the reactor, after removing the air with three times with N₂ and vacuum purge cycles, the reactor was filled with a mixture of H₂ (purity grade N6.0), CO₂ (N4.5) and N₂ (N5.0), with a H₂:CO₂:N₂ ratio of 2:2:1, until reaching a pressure of 3.6 bar absolute, using N₂ as an internal standard.

The time 0 is considered when light was switched on. For dark experiments, the reactor was heated using electrical heaters until the desired temperature, and when the temperature was stable the gas mixture was introduced. The gas mixture was premixed in a pre-chamber at RT (ambient temperature) and after introduced in the reactor. The products were analyzed by a gas chromatograph (Compact GC, Global Analyzer Solutions), gas samples were taken from the reactor using a gas tight syringe at different reaction times, and directly injected in the GC. The GC was equipped with three channels, two microthermal conductivity detectors (TCD) and one flame ionization detector (FID). The peak areas were used to determine the ratio of each compound based on calibration. If products were present in the time zero analysis, this value was subtracted from the measurements in the following times.

**Results:** The average particle size was 1.6 nm. The Au content was determined as 3.12 wt.% Au / TiO₂ with ICP-AES. The X-ray diffraction (XRD) pattern confirmed the main presence of the TiO₂ anatase based on the positions of the diffraction peaks. The characteristic diffraction peaks of Au were undetectable due to the low Au content and the small particle size.

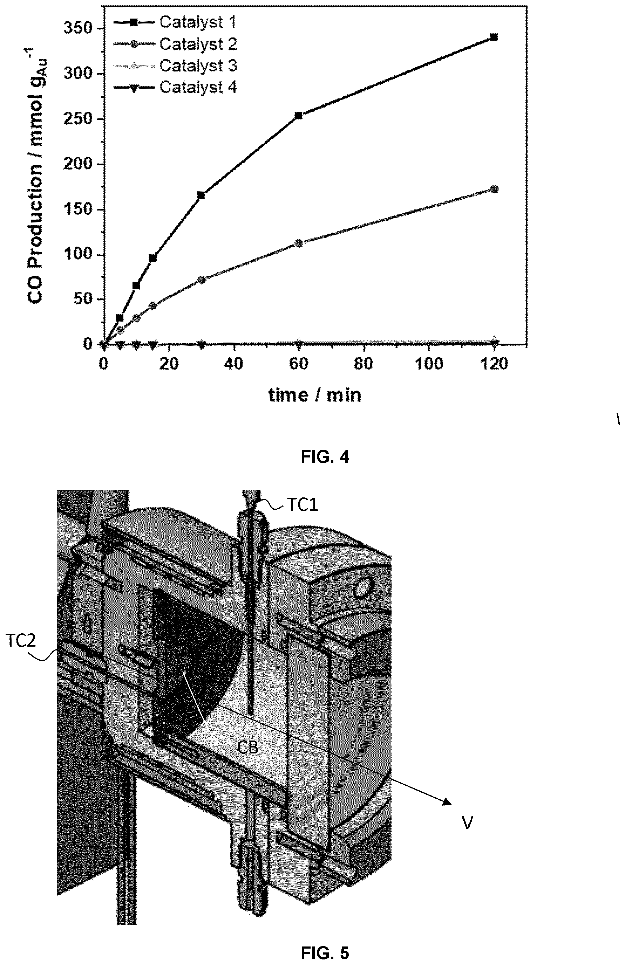

**Figure 2a** illustrates CO production vs time for the reduction of CO₂ using Au/TiO₂ photocatalyst under 14.4 sun intensity. **Fig. 2b** shows catalyst bed temperature (black/C) reactor temperature (grey/R) vs time. Reactor temperature was measured with a thermo couple above the catalyst bed but not in the light bundle, similar to thermocouple TC1 of Fig. 5.
Reaction conditions: mixture of CO₂:H₂:N₂ (2:2:1) at 3.5 bar pressure (3.12wt% Au/TiO₂, 200 mg, 14.4 sun irradiation from solar simulator (1 sun = 1 kW·m⁻², AMI.5)).

The CO evolution on Au/TiO₂ was studied under 14.4 sun for 3 hours without an external heat source, with an initial reactor temperature of 20°C. The CO production is shown in Figure 2a. When the light was switched on, the catalyst bed temperature reached 135°C rapidly. In contrast, the reactor temperature remained stable between 20°C and 30°C for the 3h reaction time (Figure 2b). The main detected product from the reaction was CO, with a selectivity of 98.2% throughout the 3h of reaction time. The initial CO production rate was 429.2 mmol·g_{Au}⁻¹·h⁻¹ and the only other detected product was CH₄. The apparent quantum efficiency was 4.7%, leading to a CO concentration in the reactor of 4.9%. This is a remarkably high efficiency considering that CO production is selectively promoted at high temperatures, and in this case only solar light was irradiated to the system without any external source of heat. Control experiments showed that no products were detected if Au was not present on the support. In order to confirm that CO₂ was the carbon source, an experiment with no CO₂ presence in the reactor was performed under light irradiation (14.4 sun), in which no products were detected.

The inventive process and catalyst achieve a selectivity to CO of 98% and an apparent photon efficiency around 5% operating at room temperature (e.g. 20°C). The catalyst was found to be capable of suppressing most of the CH₄ production even at room temperature (e.g. 20°C) and to obtain high efficiencies due to a synergy due to the plasmonic effect of the Au nanoparticles.

The lower temperatures provide the advantage of reduced sintering and lower catalyst deactivation. The photocatalytic process directly uses sunlight to promote the reaction, thereby advantageously having few energy conversion steps. This has the potential to make it a more efficient process, as well as less dependent on electricity supply.

### Example 2

**Fig. 3** illustrates a comparison of the plasmonic catalytic process of the invention (circles) under illuminated conditions at ambient temperature (14.4 sun illumination, room temperature RT, same reaction conditions and catalyst as in Example 1) and under dark conditions at 180°C (squares). Figure 3A shows CO production in mmol CO / g Au. Figure 3B shows CH₄ production in mmol CH₄ / g Au. The CO selectivity dropped to 70% under dark conditions at 180°C, indicating that light promotes the rWGS reaction over the methanation reaction. This change in selectivity shows a different kinetic mechanism between the tests under illumination and the dark tests.

### Example 3

Supported Au catalysts were prepared using wet impregnation of Au precursor with pH adjustment and calcination at temperature T_{c} and Au loading (wt.%) as indicated in **Table 1**, giving an average particle size and particle size distribution (PSD) as indicated in Table 1.

**Synthesis of the Au/TiO₂ catalyst**. The Au/TiO₂ catalyst was synthesized by a deposition-precipitation method. HAuCl₄·₃H₂O (, 99.9%) was used as the Au precursor. The Au precursor (200 mg) was added to ultra-filtered water (, 18.2 MΩ cm, 100 ml) in vigorous stirring. Then, the pH of the solution was adjusted to 9 or 4.5 by adding NaOH (0.1M). Once the pH stabilized, TiO2 (1.00 g, 99.5% anatase,) was added to the mixture, followed by an adjustment of the pH back to 9. The dispersion was left in vigorous stirring for 48 hours at room temperature, keeping a continuous control of the pH with a pH meter. The solid was recuperated by filtration and extensively washed with ultra-filtered water (18.2 MΩ cm). Subsequently, the solid was dried in a vacuum oven at 100°C for 2 hours and calcinated in a tube furnace at calcination temperature T_{c} of 200°C or 400°C in a 20:80 O₂:Ar atmosphere for 4h, following a heating ramp of 2°C·min⁻¹. Four different catalysts were prepared increasing the Au particle size as is shown in Table 1.

**Table 1**

| **Catalyst #** | **pH** | **T_{c} (°C)** | **Au (%)** | **Particle size (nm)** | **PSD** |
|---|---|---|---|---|---|
| 1 | 9 | 200 | 3.10 | 1.7 | σ = 0.95 nm |
| 2 | 9 | 400 | 2.59 | 2.9 | σ = 1.16 nm |
| 3 | 4.5 | 200 | 8.78 | 7.3 | σ = 11.0 nm |
| 4 | 4.5 | 400 | 8.50 | 15.8 | σ = 15.4 nm |
| PSD = Particle size distribution. | | | | | |

Catalyst performance for rWGS was tested similar as in Example 1. The reactor temperature was maintained below 40°C.

**Fig.** 4 shows the results. The CO production per gram Au was much higher for Catalysts #1 and #2 than for Catalysts #3 and #4. These results illustrate that it may be advantageous to use catalysts particles with a particle size of 5.0 nm or less, in particular with a particle size of 2.0 nm or less. This goes against prior art teachings to use nano particles with particle sizes larger than 10 nm for obtaining plasmonic effects.

**Fig. 5** schematically illustrates a reactor as used in the examples. The reactor is shown rotated 90°, the arrow V indicates the direction that is upward vertical in use. TC1 and TC2 are two thermocouples where TC1 measures the reactor temperature and TC2 measures the catalyst bed temperature. CB indicates the catalyst bed. A third thermocouple was arranged for measuring the temperature in the catalyst bed, this third thermo couple is not shown.

## Claims

1. A plasmonic catalytic process for the reverse water gas shift reaction (1)
CO₂ + H₂ ⇄ CO + H₂O (1)
using a plasmonic catalyst comprising supported plasmonic metal nanoparticles, wherein the process involves exposing the catalyst to light, and wherein the temperature of the reactor is less than 95°C.

2. The process according to claim 1, wherein the metal nanoparticles comprise at least one strongly plasmonic metal selected from the group consisting of Au, Ag, Al, and Cu, with an average particle size of 5.0 nm or less,
and wherein the support comprises a metal oxide.

3. The process according to claim 2, wherein the metal oxide support is a semiconductor.

4. The process according to claim 3, wherein the plasmonic catalyst comprises TiO₂-supported Au plasmonic nanoparticles, preferably wherein the Au nanoparticles have an average size of 2 nm or less.

5. The process according to claim 1, wherein the wherein the nanoparticles have an average particle size of 5.0 nm or less,
wherein preferably the support is made of a porous metal oxide.

6. The process according to any of the preceding claims, wherein the catalyst is irradiated with at least natural solar light and/or concentrated natural solar light.

7. The process according to any of the preceding claims, wherein the catalyst is irradiated with (concentrated) natural solar light and an energy efficient man-made light source to ensure a continuous chemical process at constant irradiation.

8. The process according to any of the preceding claims, carried out at a pressure of less than 5 bar absolute.

9. The process according to any of the preceding claims, carried out with a reactor temperature of less than 30°C.

10. The process according to any of the preceding claims, carried out in a continuous flow reactor.

11. The process according to any of the preceding claims, wherein the catalyst comprises 1.0 - 10 wt.% Au based on TiO₂ support weight, preferably 2 - 5 wt.% Au based on TiO₂ support weight.

12. A catalyst comprising TiO₂-supported Au nanoparticles, wherein the nanoparticles have an average particle size of 5 nm or less, preferably an average particle size of 2 nm or less, preferably wherein the catalyst comprises 1 - 10 wt.% Au based on weight of TiO₂ support, more preferably 2 - 5 wt.%.

13. The process of any of claims 1-11 carried out using the catalyst of claim 12.
